(19) Europäisches Patentamt
European Patent Office
Office européen des brevets

(11) **EP 2 394 454 B1**

(12) **EUROPEAN PATENT SPECIFICATION**

(45) Date of publication and mention of the grant of the patent:
**01.11.2017 Bulletin 2017/44**

(51) Int Cl.:
***H04L 5/00*** *(2006.01)*　　***H04W 72/08*** *(2009.01)*

(21) Application number: **09779030.7**

(86) International application number:
**PCT/EP2009/051464**

(22) Date of filing: **09.02.2009**

(87) International publication number:
**WO 2010/088970 (12.08.2010 Gazette 2010/32)**

(54) **APPARATUS FOR CONTROLLING SPECTRUM EXPLOITATION UTILISING OVERLAPPING CHANNEL BANDWIDTHS**

VORRICHTUNG ZUR STEUERUNG VON SPEKTRUMSAUSNUTZUNG UNTER VERWENDUNG VON ÜBERLAPPENDEN KANALBANDBREITEN

APPAREIL DE GESTION DE L'EXPLOITATION D'UN SPECTRE, UTILISANT DES LARGEURS DE BANDE DE CANAL SE CHEVAUCHANT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**14.12.2011 Bulletin 2011/50**

(73) Proprietor: **Nokia Solutions and Networks Oy 02610 Espoo (FI)**

(72) Inventors:
 • **HAKKINEN, Hannu Tapio FI-02180 Espoo (FI)**

 • **RÖSSEL, Sabine 81739 Munich (DE)**

(74) Representative: **Nokia Corporation et al Intellectual Property Department Karakaari 7 02610 Espoo (FI)**

(56) References cited:
 **WO-A-2004/057894　　WO-A-2007/136306 US-A1- 2007 298 807**

## Description

Field of the Invention

The present invention generally relates to wireless communication. In particular, the present invention relates to apparatuses, methods and computer programs operating in wireless communication systems and/or controlling wireless communication systems as well as to systems comprising such apparatuses and computer programs which may be operated and/or controlled by such methods and computer programs.

Specifically, non-limiting embodiments of the present invention relate to the LTE/E-UTRAN Downlink and Uplink air interface and its evolution towards further releases (i.e. LTE-Advanced) and may be applied to any other OFDM or any other transmission technology.

Related Background Art

For the description set forth hereinafter, the following abbreviations are defined:

| | |
|---|---|
| 3GPP | 3rd Generation Partnership Project |
| ARQ | Automatic Repeat Request |
| DL | Downlink |
| eNB | evolved Node B |
| E-UTRAN | Evolved UTRAN system |
| ICIC | Inter-Cell Interference Coordination |
| LTE | Long Term Evolution of UTRAN system |
| LTE Rel-8 | LTE release 8 |
| OFDM | Orthogonal Frequency Division Multiplex |
| PBCH | Physical Broadcast Channel |
| PCFICH | Physical Format Indicator Channel |
| PDCCH | Physical Downlink Control Channel |
| PDSCH | Physical Downlink Shared Channel |
| PHICH | Physical Hybrid ARQ Indicator Channel |
| PMCH | Physical Multicast Channel |
| PRACH | Physical Random Access Channel |
| PUCCH | Physical Uplink Control Channel |
| PUSCH | Physical Uplink Shared Channel |
| RRC | Radio Resource Control |
| SC | sub-carrier |
| TTI | Transmission Time Interval |
| UE | User Equipment |
| UL | Uplink |
| UMTS | Universal Mobile Telecommunications System |
| UTRAN | UMTS Terrestrial Radio Access Network |

Related prior art can be found e.g. in the technical specifications of the 3GPP, namely documents TS 36.101 (v8.4.0), TS 36.104 (v8.4.0), TS 36.211 (v8.5.0), TS 36.212 (v8.5.0), TS 36.213 (v8.5.0), and TS 36.331 (v8.4.0), all related to release 8 and hereinafter referred to in the form of "TS 36.101", etc.

According to this prior art, the LTE/E-UTRAN Downlink air interface (see TS 36.211, TS 36.212, and TS 36.213) is based on Orthogonal Frequency Division Multiple Access comprising the following data channels: Physical Downlink Shared Channel (PDSCH) and Physical Multicast Channel (PMCH), as well as on the following control channels: Physical Downlink Control Channel (PDCCH), Physical Control Format Indicator Channel (PCFICH), Physical Hybrid Indicator Channel (PHICH), Physical Broadcast Channel (PBCH), and Primary and secondary synchronization channel (SCH).

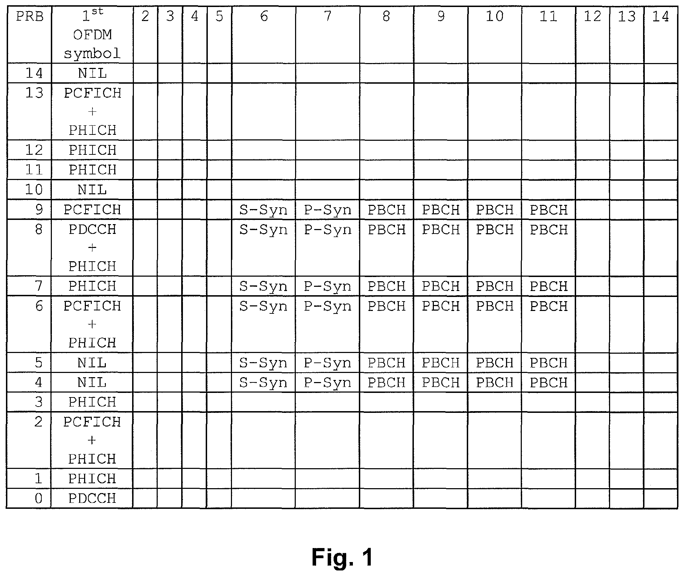

Fig. 1 shows a TTI (LTE sub-frame) containing the primary and secondary synchronization channels (SCH) as well as the PBCH with the 1st OFDM symbol for PDCCH, PCFICH, and PHICH, i.e. the allocation in the 1st OFDM symbol.

For LTE Rel-8 system bandwidths larger than 1.4 MHz, 1, 2, or 3 OFDM symbols per TTI can be configured for the PDCCH channel. The number of PDDCH OFDM symbols depends on the traffic model, i.e. on the amount of user equipment scheduled (both in Downlink and in Uplink) in the corresponding TTI.

The LTE/E-UTRAN Uplink air interface (see TS 36.211, TS 36.212, and TS 36.213) is based on Single Carrier Frequency Division Multiple Access (SC-FDMA) comprising the following shared channel: Physical Uplink Shared Channel (PUSCH) and the following physical control channels: Physical Uplink Control Channel (PUCCH) and the Physical Random Access Channel (PRACH).

At present, the PUCCH resource pool can be configured symmetrically with respect to the carrier center at the lower and upper carrier edges. The PUCCH is hopping with a hopping frequency of ½ TTI (= 1 time slot).

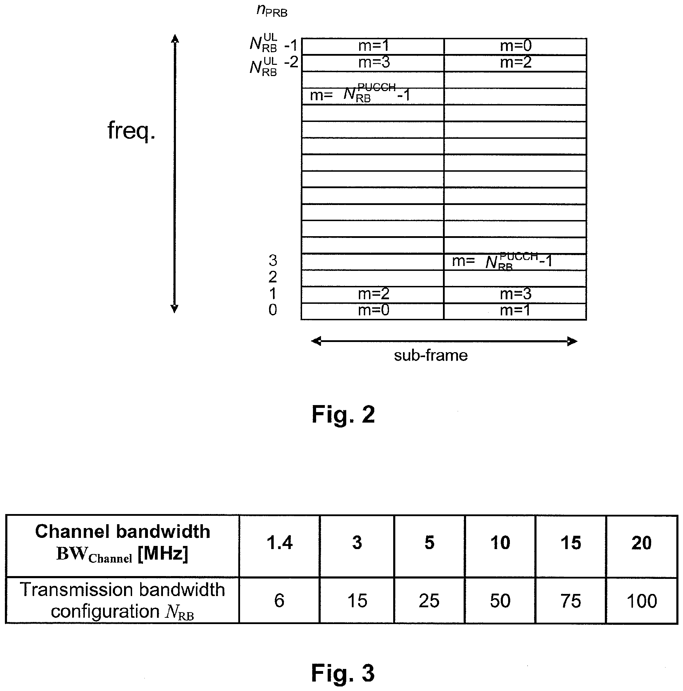

The mapping of logical resource blocks (denoted as m) into physical resource blocks is shown in Fig. 2. It is to be noted that slot based frequency hopping is always used on PUCCH. The following denotations apply:

$n_{\mathrm{PRB}}$     Physical resource block number (index)

$N_{\mathrm{RB}}^{\mathrm{UL}}$     Uplink bandwidth configuration, expressed in multiples of ( $N_{\mathrm{sc}}^{\mathrm{RB}} = 12$ )

Currently, an asymmetric (with respect to the carrier center) PUCCH resource pool configuration is discussed in 3GPP.

The PRACH channel can be configured anywhere in the Uplink spectrum. The following further denotations apply:

$n_{PRB}^{RA}$     First physical resource block occupied by PRACH resource considered

$n_{PRB\,offset}^{RA}$     First physical resource block available for PRACH

The first physical resource block $n_{PRB}^{RA}$ allocated to the PRACH opportunity is defined as $n_{PRB}^{RA} = n_{PRB\,offset}^{RA}$ , where the PRACH frequency offset $n_{PRBoffset}^{RA}$ is expressed as a physical resource block number configured by higher layers and fulfilling $0 \leq n_{PRBoffset}^{RA} \leq N_{\mathrm{RB}}^{\mathrm{UL}} - 6$ .

The resource mapping of the physical Downlink and Uplink channels relates to the Downlink N_DL_RB and Uplink system bandwidth N_UL_RB which are configuration parameters in the TS 36.21x specifications and which represent the available number of Downlink or Uplink Resource Blocks (RBs).

While the PBCH and the Primary and Secondary SCH are centered with respect to the DL carrier using a narrow bandwidth of 6 Resource Blocks (RBs), the PDCCH, the PCFICH and the PHICH extend over the complete Downlink system bandwidth as configured by N_DL_RB. The PDSCH and the PMCH allocations are controlled by scheduling. Further limitation of PDSCH and PMCH bandwidth beyond the configuration limit N_DL_RB depends on the DL scheduler and is LTE Rel-8 compliant.

Further limitation, however, of the PDCCH, PCFICH, and PHICH beyond the configured Downlink system bandwidth is not possible in general and may require an optimized control channel DL scheduler.

While the PRACH can be configured anywhere, and the PUSCH can be limited in bandwidth beyond the configuration limits set by N_UL_RB, the PUCCH resource pool exactly exploits the configured N_UL_RB.

Hence, further limitation of UL bandwidth beyond the configured Uplink system bandwidth is not possible in general or may require an optimized control channel UL scheduler.

The LTE system bandwidths could be flexibly configured if all options for N_DL_RB and N-UL-RB ranging from 6 RBs up to 110 RBs are supported.

However, following TS 36.104 and TS 36.101 only selected LTE system bandwidths N_RB are supported by the standard Rel-8: For frequency division duplexing (FDD) these are 1.4 MHz, 3 MHz, 5 MHz, 10 MHz, 15 MHz and 20 MHz. The standardized system bandwidths are given e.g. in Table 5.6-1 of version 8.4.0 of TS 36.104 (analogous in TS 36.101) which is shown in Fig. 3 (transmission bandwidth table). That is, Fig. 3 shows the channel bandwidth $BW_{\mathrm{channel}}$ as a frequency in [MHz] in relation to the transmission bandwidth configuration $N_{\mathrm{RB}}$ which is the highest transmission bandwidth allowed for uplink or downlink in a given channel bandwidth, measured in resource block (RB) units.

The RRC layer sets the Downlink and Uplink system bandwidths in the Master and System Information Blocks as specified in TS 36.331. The supported bandwidths (for Downlink and Uplink independent values) correspond to the ones listed in Table 5.6-1 of TS 36.104 shown in Fig. 3. The parameter has nine spare values for potentially new system bandwidth configurations.

In accordance to the aforementioned, in LTE Rel-8 a deviation from the configured Downlink and Uplink system bandwidths is not possible in general.

Hence, the strict limitation of LTE Downlink and Uplink system bandwidths leads to limitations in spectrum exploitation.

Specifically, operators having spectrum blocks not matching the configurable system bandwidths cannot fully exploit their spectrum. They should use the next smaller system bandwidth (e.g. 5 MHz in a 9 MHz frequency block) or retreat to a multi-carrier LTE system where a set of smaller bandwidths is used to exploit the operator's spectrum.

In future LTE releases (e.g. LTE-Advanced), carrier aggregation will be a key feature. However, with the limited set of LTE Release 8 bandwidths also the contiguous or non-contiguous aggregation of the carriers will suffer from limitations for spectrum exploitation. US 2007298807 A1 discloses a wireless communication system, where a base station may simultaneously communicate in one sector over frequency bandwidths, BWs, F1 and F2, in another sector over the BWs F1 and F3, and in a further sector over the BWs F1 and F4, wherein F1 is not overlapping with any of the other BWs, while F2 partially overlaps with F3, and F3 partially overlaps with F4, and their center frequencies are uniformly spaced over the available spectrum. F1 is used with frequency reuse, FR, equal to 1, while F2, F3 and F4 are used with FR equal to 3. Operators having spectrum blocks not matching the configurable system bandwidths may thus combine multiple smaller carriers for a multi-carrier LTE network (e.g. 5 + 3 MHz in a 9 MHz frequency block), or squeeze a 10 MHz system bandwidth into 9 MHz.

The former solution does not fully exploit the available spectrum, while the latter solution can only be used if the deviation from the configurable DL system bandwidth is not too large and if the coexistence situation allows for using standard terminals (e.g. in this case at 10 MHz).

Summary of the Invention

In the light of the above, it is an object of the present invention to overcome the shortcomings of the prior art. Said object is achieved through the subject matter of the independent claims. Preferred embodiments are set out in the dependent claims.

Brief description of the drawings

Other objects, features and advantages of the present invention will become apparent from the following detailed description of the embodiments of the present invention which is to be taken in conjunction with the drawings, in which:

Fig. 1 shows an exemplary allocation in a 1st OFDM symbol in an LTE sub-frame (PDCCH, PCFICH, and PHICH) according to the prior art;

Fig. 2 shows the current mapping to physical resource blocks for PUCCH according to the prior art specification TS 36.211;

Fig. 3 shows the transmission bandwidth table as disclosed by the prior art specification TS 36.104;

Fig. 4 shows overlapped carriers of 5 MHz bandwidth with a center frequency distance of 3.9 MHz in order to cover less than but closest possible to 9 MHz spectrum (DL view) as an example illustrating the present invention;

Fig. 5a shows varying Frequency Reuse > 1 schemes for frequency blocks not matching LTE Rel-8 bandwidths according to an embodiment of the present invention; and

Fig. 5b shows varying Frequency Reuse > 1 schemes for frequency blocks not matching LTE Rel-8 bandwidths according to another embodiment of the present invention.

Detailed Description of the present Embodiments

In the following, description will be made to what are presently considered to be preferred embodiments of the present invention. It is to be understood, however, that the description is given by way of example only, and that the described embodiments are by no means to be understood as limiting the present invention thereto.

For example, for illustration purposes, in the following exemplary embodiments are described inter alia with respect to LTE/E-UTRAN. However, it should be appreciated that these exemplary embodiments are not limited for use among this particular type of wireless communication systems, and according to further exemplary embodiments, the present invention can be applied to other communication systems where it is possible that the configurable system bandwidths do not match the frequency spectrum block for operation. Thus, it should be apparent that still further exemplary embodiments are related to optimized spectrum exploitation in other communication systems.

According to certain embodiments of the present invention, a given frequency spectrum block for operation is exploited in a more optimized way by a combination of multiple overlapped carriers which overlap with respect to the configurable standard system bandwidth both for LTE Release 8 as well as for future LTE releases (e.g. LTE-Advanced) and which increase the possibilities to enhance Inter-Cell Interference Coordination (ICIC) schemes as an example for network optimization.

For example, for LTE Rel-8, two of the 5 MHz configured system bandwidths can be used in overlapped fashion for a 9 or 9.2 MHz spectrum (typical GSM re-framing remainder).

Further, for LTE-Advanced, e.g. a 20 or (2 x 10) MHz configured system bandwidth plus a 10 MHz configured system bandwidth can be used in overlapped fashion for a 28 MHz spectrum to be LTE Rel-8 backward compliant (4 x 7 MHz blocks in WiMAX band).

Accordingly, the overlapped carriers may be

- Applied compliant to LTE Rel-8,
- Used backward-compliant in future LTE releases supporting LTE Rel-8 UEs and eNBs,
- Used analogously in LTE-Advanced when aggregating LTE Rel-8 carriers in an overlapped manner, and
- Applied to other OFDM-based technologies, as well as to further structured transmission technologies based on aggregations of smaller narrowband channels.

Overlapped carriers can be exploited to enhance the degrees of freedom for network optimization for example for Inter-Cell Interference Coordination (ICIC).

Referring e.g. to the above example based on a 9 MHz frequency block, an operator may deploy a Frequency Reuse > 1 scheme for Inter-Cell Interference Coordination which consists of the following three cell deployment variants:

1) 5 MHz (with carrier center at 2.5 MHz) + 3 MHz with carrier center at 4 MHz from lower edge of frequency block; uncovered are 1 MHz at upper end of frequency block.

2) 3 MHz (with carrier center at 2.5 MHz) + 5 MHz with carrier center at 4 MHz from lower edge of frequency block; uncovered are 1 MHz at lower end of frequency block.

3) 5 MHz (with carrier center at 2.5 MHz) + 5 MHz with carrier center at 4 MHz from lower edge of frequency block; uncovered (at least with respect to the shared channel PDSCH) is the overlap region between the two 5 MHz carriers.

This is a set of multi-carrier schemes which maintains the carrier center positions (enabling intra-frequency handover for ease of implementation as well as handover optimization) and leaves varying parts of the shared channel unallocated such that an ICIC scheme can be applied.

In the following, certain embodiments of the present invention are described in greater detail in order to illustrate the obtainable advantages and technical possibilities even further.

As indicated above, according to certain embodiments of the present invention the overlapped carriers can be used for optimum spectrum exploitation. This is described hereinafter in further detail.

The concept of overlapped carriers for LTE Rel-8 and backward-compliant with LTE Rel-8 can comprise the following.

The eNB is synchronized to the level of OFDM symbols with a synchronization spread significantly less than the propagation delay spread.

Two or more carriers may be transmitted from a single power amplifier or multiple power amplifiers as follows: The center frequencies of these carriers and the standard configurable bandwidth of these carriers are defined in such a way that the overall bandwidth covered by the combined multiple carriers matches the spectrum bandwidth available to the operator. In the example used so far, this corresponds in allocating two 5 MHz carriers with a 3.9 MHz distance between the center frequencies to cover close to 9 MHz.

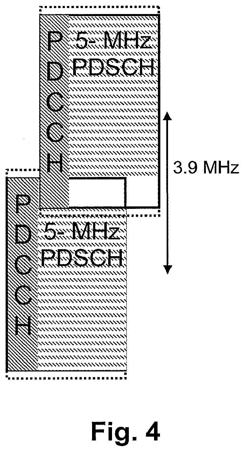

This is illustrated in Fig. 4 showing overlapped carriers of 5 MHz bandwidth with a center frequency distance of 3.9 MHz in order to cover less than but closest possible to a 9 MHz spectrum (DL view).

Specifically, according to certain embodiments of the present invention, the following Downlink coordination steps can be applied in case of overlapped carriers:

- PBCH, Primary and Secondary Synch: The center frequency distances of overlapped carriers are selected to be large enough to avoid resource mapping conflicts with respect to PBCH, Primary and Secondary Synch.
- PDCCH (and PCFICH, PHICH): As the PDCCH (and PCFICH, PHICH) for the UE extends over the full configured bandwidth (i.e. 5 MHz) for both or all overlapped carriers, interference on control channel OFDM symbols can be avoided by a defined offset.
- PDSCH: The DL scheduler does not allocate in the overlap region to avoid Common Reference Signal conflicts with the data.
- Outer (virtual) guard bands: For the dimensioning of the overlapped carrier system, it is sufficient to provision outer (virtual) guard bands related to the individual carrier bandwidths. In the example, the virtual guard band of 2 x 250 kHz for 5 MHz carriers is established as outer guard band.
- Cell-specific Downlink reference symbols:

Cell-specific Downlink reference symbols are calculated in both cases just as if the carriers do not overlap. In the overlapped case, the cell-specific Downlink reference symbols of both carriers are sent in the overlap area. Collision of the two reference symbol patterns can be avoided with suitable configuration of physical layer parameters. Further, need for puncturing of PDCCH symbols can be avoided or minimized depending on the number of OFDM symbols allocated for PDCCH and on the number of antenna ports. An example case: two antenna ports and three OFDM symbols for PDCCH. The sub-frames of the two carriers should be time offset by six OFDMA symbols. In this case, one PDCCH would not be punctured at all and another PDCCH must be punctured within a single OFDM symbol. Some puncturing may be tolerable due to robust encoding and techniques for proper de-population of PDCCH physical resource blocks. In the frequency domain, i.e. in terms of sub-carriers, mapping of reference symbols can be controlled by the selection of the two Cell IDs. For further details, reference is made to chapter 6.10.1.2 of 3GPP TS 36.211 v8.4.0.

Uplink interference coordination for overlapped carriers exploits a PUCCH blanking technique. Based on LTE release 8, PUCCH Blanking refers the following: The PUCCH resource pool in multiples of Physical Resource Blocks (PRBs) is overdimensioned first, then outer PRBs of the PUCCH resource pool are not used for PUCCH allocation.

Finally, depending on the available UL bandwidth, the UL scheduler may allocate the PUSCH channel onto unused PUCCH resources.

In contrast to the Downlink, in Uplink the overlap area is allocated to one of the overlapping carriers.

According to certain embodiments of the present invention, considerable resource gains from are obtained by the LTE Rel-8 overlapped carrier deployment.

In order to illustrate the potential of overlapped carrier deployment, in the following table resource gains for an overlapped carrier deployment are compared to a conservative multiple carrier deployment with (one) smaller bandwidth(s).

**Table 1: Resource gains for an overlapped carrier deployment**

| 9 MHz Solution | Available DL RBs | Delta vs. 5+3 MHz | Peak DL RBs | Available UL RBs | Delta vs. 5+3 MHz | Peak UL RBs |
|---|---|---|---|---|---|---|
| Conservative: 5 + 3 MHz | 25 + 15 = 40 | 0% | 25 | 25 + 15 = 40 | + 0% | 20 |
| Overlapped 5 + 5 MHz | 2 x (25 - 3) = 44 | + 10% | 25 | (25 - 3) + 25 = 47 | + 17,5% | 20 |

As mentioned above, according to certain embodiments of the present invention an ICIC network optimization is enabled by exploiting the overlapped carrier deployment. This is described hereinafter in further detail.

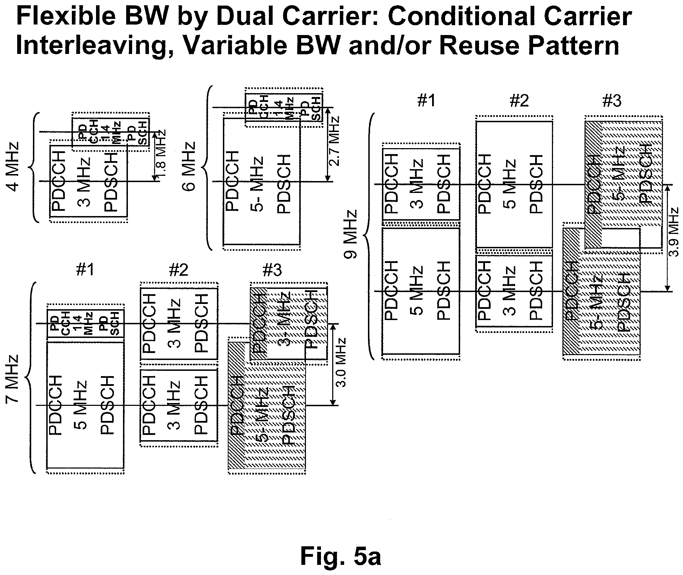

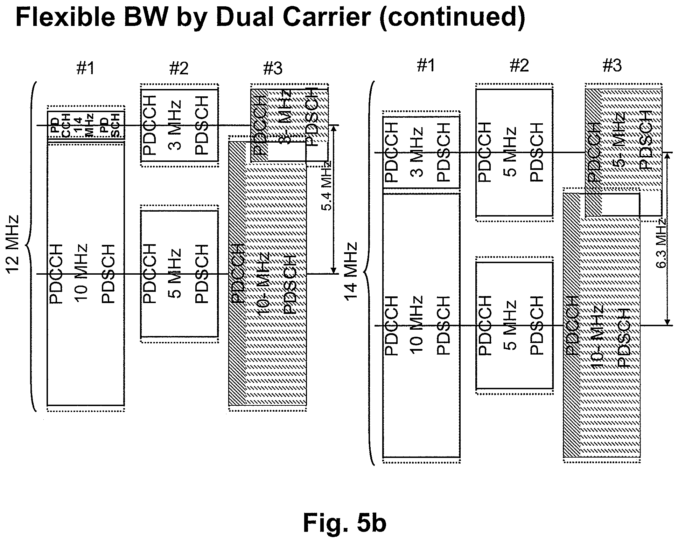

Figures 5a and 5b illustrate for various frequency blocks not matching the LTE Rel-8 bandwidths potential dual-carrier deployments that allow for Inter-Cell Interference Coordination.

In those deployment variations using overlapped carriers, the non-allocation of the downlink channels in the overlapped area and the allocation of the uplink channels in the overlapped area are indicated by hatching in the same manner as in Fig. 3. The hatchings are omitted from the other variations in order to increase the intelligibility.

As explained above for the example based on a 9 MHz frequency block, an operator may deploy a Frequency Reuse > 1 scheme for Inter-Cell Interference Coordination which consists of the following three cell deployment variants:

1) 5 MHz (with carrier center at 2.5 MHz) + 3 MHz with carrier center at 4 MHz from lower edge of frequency block; uncovered are 1 MHz at upper end of frequency block.
2) 3 MHz (with carrier center at 2.5 MHz) + 5 MHz with carrier center at 4 MHz from lower edge of frequency block; uncovered are 1 MHz at lower end of frequency block.
3) 5 MHz (with carrier center at 2.5 MHz) + 5 MHz with carrier center at 4 MHz from lower edge of frequency block; uncovered (at least with respect to the shared channel PDSCH) is the overlap region between the two 5 MHz carriers.

This is an example for a dual-carrier scheme based on overlapped carriers which maintains the carrier center positions (enabling intra-frequency handover for ease of implementation as well as handover optimization) and leaves varying parts of the frequency block unallocated such that a static ICIC scheme can be applied.

Those embodiments of the present invention which include the dual-carrier ICIC scenarios based on overlapped carriers comprise the following advantages:

- By maintaining the carrier center positions, intra-frequency handover is possible on both carriers. (In addition, blind inter-frequency handover within a sector may be applied for load balancing.)
- Variable bandwidths on a per cell basis can be combined with ICIC schemes.
- Orthogonality with respect to sub-carriers (i.e. 15 kHz spacing) over both carriers can be maintained: n x 300 kHz carrier spacing.
- Reuse of 1 or 3/2 on system level can be supported.

As mentioned above, certain embodiments of the present invention are related to aggregating overlapped carriers, for example in LTE-Advanced. This is described hereinafter in further detail.

That is, both Downlink and Uplink interference coordination for overlapped carriers can be of great advantage in future LTE releases, namely in the LTE-Advanced system. In 3GPP, it is widely agreed that an LTE Rel-8 backward compatible approach to providing more than 20 MHz bandwidth consists of aggregating 20 MHz and 10 MHz LTE Rel-8 carriers in an LTE-Advanced super channel structure.

In order to understand the benefits of the overlapped carrier concept for LTE-Advanced, an example of deploying 2 x 6 MHz carriers in a 12 MHz frequency block - which is typical in 2.6 GHz frequency bands - is studied in the following. Currently, there are basically three different methods for LTE-Advanced carrier aggregation discussed:

**Table 2: Carrier aggregation in LTE-Advanced for contiguous non-overlapping carriers**

| A) | C) |
|---|---|
| • Control channels in all aggregated Component Carriers (CC) | • Control channels only on master CC |
| • Each CC has its own Transport Block | • Single Transport Block distributed over aggregated master and slave CCs |
| • 2 x 6 MHz (as extended from 5 MHz) | • 10 MHz master bandwidth + 2 MHz slave bandwidth |
| • 2 x 5 MHz can be allocated LTE Release 8 backward compatible | • 10 MHz can be allocated LTE Release 8 backward compatible |
| B) | |
| • Control channels in all CCs | |
| • Single Transport Block distributed over all aggregated CCs | |
| • 2 x 6 MHz (as extended from 5 MHz) | |
| • 2 x 5 MHz can be allocated LTE Release 8 backward compatible | |

While carrier aggregation in LTE-Advanced for non-overlapping carriers (see Table 2) requires bandwidth extension for LTE Release 8 backward compatibility on the one hand and standardization of RF requirements for new bandwidths (like 6 MHz in this example) on the other hand, using the overlapped aggregated carriers (see Table 3) enables LTE Release 8 backward compatibility directly. Also, the complete bandwidth is open for LTE Release 8 backward compatibility allowing for a higher amount of low-end mobiles also in an LTE-Advanced system.

That is, using the contiguous carrier aggregation concept for a 12 (2 x 6) MHz frequency block, the following possibilities exist:

**Table 3: Carrier aggregation in LTE-Advanced for contiguous overlapped carriers**

| A) | C) |
|---|---|
| • Control channels in all aggregated Component Carriers (CC) | • Control channels only on master CC |
| • Each CC has its own Transport Block | • Single Transport Block distributed over aggregated master and slave CCs |
| • 10 MHz + overlapped 3 MHz | • 10 MHz master bandwidth + 2 MHz slave bandwidth |
| • 12 MHz can be allocated LTE Release 8 backward compatible | • 10 MHz can be allocated LTE Release 8 backward compatible |
| B) | |
| • Control channels in all CCs | |
| • Single Transport Block distributed over all aggregated CCs | |
| • 10 MHz + overlapped 3 MHz | |
| • 12 MHz can be allocated LTE Release 8 backward compatible | |

Certain embodiments of the present invention also include the following.

In an enhanced system such as e.g. the LTE-Advanced release of the 3GPP LTE standard selecting, combining, coordinating, and scheduling overlapping pre-configured channel bandwidths is applied to aggregated channels (or Component Carriers).

As aggregated channels (or Component Carriers) refer to a system enhancement where the user equipment uses these channels at the same time, these embodiments also comprise that the concept of overlapping carriers is applied to user equipment where overlapped pre-configured channel bandwidths are used at the same time.

As aggregated channels (or Component Carriers) also refer to a system where the base station performs scheduling decisions for various component carrier aggregation options, these embodiments also comprise that the base station can schedule in such a way that the user equipment can use overlapped pre-configured channel bandwidths at the same time. It is to be understood that a base station may also be a Node B and an evolved Node B, respectively.

According to the above description, it should be apparent that exemplary embodiments of the present invention provide, for example from the perspective of a base station such as an evolved Node B (eNB) or from the perspective of a user equipment, or a component thereof, an apparatus embodying the same, a method for controlling and/or operating the same, and computer program(s) controlling and/or operating the same as well as mediums carrying such computer program(s) and forming computer program product(s). The exemplary embodiments of the present invention particularly also include any combination of the above described features unless explicitly described to be technically contrary or exclusively alternative.

For example, described above are apparatuses, methods and computer program products capable of optimizing spectrum exploitation and network optimization e.g. by providing overlapped carriers.

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

What is described above is what is presently considered to be preferred embodiments of the present invention. However, as is apparent to the skilled reader, these are provided for illustrative purposes only and are in no way intended that the present invention is restricted thereto. The present invention is defined by the appended claims.

**Claims**

1. An apparatus comprised in a user equipment, comprising:

   means for utilizing in a wireless communication system a combination (#3) of pre-configured channel bandwidths within an available frequency spectrum for operation that does not match with configurable system bandwidths, wherein the combination includes overlapping pre-configured channel bandwidths, and wherein the set of available combinations (#1, #2, #3) of preconfigured channel bandwidths deployed with a Frequency Reuse scheme higher than 1 maintains carrier center positions and leaves varying parts of the frequency spectrum unallocated.

2. The apparatus according to claim 1, wherein carriers corresponding to the overlapping preconfigured channel bandwidths comprise a time offset.

3. The apparatus according to any of the preceding claims, wherein outer guard bands for the available frequency spectrum in which no channels are to be allocated are provided by virtual guard bands of the preconfigured channel bandwidths.

4. The apparatus according claim 1, wherein the means for utilizing is further for utilizing the overlapping preconfigured channel bandwidths at the same time.

5. A method for use in a user equipment, comprising:

   utilizing in a wireless communication system a combination (#3) of pre-configured channel bandwidths within an available frequency spectrum for operation that does not match with configurable system bandwidths, wherein the combination includes overlapping pre-configured channel bandwidths, and wherein the set of available combinations (#1, #2, #3) of preconfigured channel bandwidths deployed with a Frequency Reuse scheme higher than 1 maintains carrier center positions and leaves varying parts of the frequency spectrum unallocated.

6. The method according to claim 5, wherein carriers corresponding to the overlapping preconfigured channel bandwidths comprise a time offset.

7. The method according to any of claims 5 to 6, wherein outer guard bands for the available frequency spectrum in which no channels are to be allocated are provided by virtual guard bands of the preconfigured channel bandwidths.

8. The method according claim 5, further comprising utilizing the overlapping preconfigured channel bandwidths at the same time.

9. A computer program product embodied on a distribution medium readable by a computer and comprising program instructions which, when loaded into an apparatus, comprised in a user equipment execute the method according to any of claims 5 to 8.

10. An apparatus comprised in a base station, comprising:

means for scheduling in a wireless communication system configured to use a combination (#3) of pre-configured channel bandwidths within an available frequency spectrum for operation that does not match with configurable system bandwidths, wherein the combination includes overlapping pre-configured channel bandwidths, and wherein the set of available combinations (#1, #2, #3) of preconfigured channel bandwidths deployed with a Frequency Reuse scheme higher than 1 maintains carrier center positions and leaves varying parts of the frequency spectrum unallocated.

11. The apparatus according to 10, further comprising:

a downlink scheduler element configured to avoid allocation of a downlink data channel in a region of overlapping preconfigured channel bandwidths.

12. The apparatus according to claim 11, wherein the downlink scheduler element is further configured to send cell-specific downlink reference symbols of both of the carriers corresponding to pair-wise overlapping preconfigured channel bandwidths in the region of overlapping preconfigured channel bandwidths.

13. The apparatus according to claim 10, wherein the means for scheduling is further for scheduling the overlapping preconfigured channel bandwidths for use at the same time.

14. A method for use in a base station, comprising:

scheduling in a wireless communication system configured to use a combination (#3) of pre-configured channel bandwidths within an available frequency spectrum for operation that does not match with configurable system bandwidths, wherein the combination includes overlapping pre-configured channel bandwidths, and wherein the set of available combinations (#1, #2, #3) of preconfigured channel bandwidths deployed with a Frequency Reuse scheme higher than 1 maintains carrier center positions and leaves varying parts of the frequency spectrum unallocated.


**Patentansprüche**

1. Vorrichtung, die in einem Anwendergerät enthalten ist und die umfasst:

Mittel zum Verwenden in einem drahtlosen Kommunikationssystem einer Kombination (#3) von vorkonfigurierten Kanalbandbreiten innerhalb eines verfügbaren Frequenzspektrums für einen Vorgang, der nicht mit konfigurierbaren Systembandbreiten übereinstimmt, wobei die Kombination sich überdeckende vorkonfigurierte Kanalbandbreiten enthält und wobei die Gruppe verfügbarer Kombinationen (#1, #2, #3) von vorkonfigurierten Kanalbandbreiten, die mit einem Frequenzwiederverwendungsschema, das größer als 1 ist, eingesetzt werden, Trägermittelpositionen beibehält und variierende Teile des Frequenzspektrums unzugeteilt belässt.

2. Vorrichtung nach Anspruch 1, wobei die Träger, die den sich überdeckenden vorkonfigurierten Kanalbandbreiten entsprechen, einen Zeitversatz umfassen.

3. Vorrichtung nach einem der vorhergehenden Ansprüche, wobei äußere Wächterbänder für das verfügbare Frequenzspektrum, in dem keine Kanäle zuzuteilen sind, durch virtuelle Wächterbänder der vorkonfigurierten Kanalbandbreiten bereitgestellt sind.

**4.** Vorrichtung nach Anspruch 1, wobei die Mittel zum Verwenden ferner zum Verwenden der sich überdeckenden vorkonfigurierten Kanalbandbreiten zur selben Zeit dienen.

**5.** Verfahren für die Verwendung in einem Anwendergerät, das umfasst:

Verwenden in einem drahtlosen Kommunikationssystem einer Kombination (#3) von vorkonfigurierten Kanalbandbreiten innerhalb eines verfügbaren Frequenzspektrums für einen Vorgang, der nicht mit konfigurierbaren Systembandbreiten übereinstimmt, wobei die Kombination sich überdeckende vorkonfigurierte Kanalbandbreiten enthält und wobei die Gruppe verfügbarer Kombinationen (#1, #2, #3) von vorkonfigurierten Kanalbandbreiten, die mit einem Frequenzwiederverwendungsschema, das größer als 1 ist, eingesetzt werden, Trägermittelpositionen beibehält und variierende Teile des Frequenzspektrums unzugeteilt belässt.

**6.** Verfahren nach Anspruch 5, wobei Träger, die den sich überdeckenden vorkonfigurierten Kanalbandbreiten entsprechen, einen Zeitversatz umfassen.

**7.** Verfahren nach einem der Ansprüche 5 bis 6, wobei äußere Wächterbänder für das verfügbare Frequenzspektrum, in dem keine Kanäle zuzuteilen sind, durch virtuelle Wächterbänder der vorkonfigurierten Kanalbandbreiten bereitgestellt werden.

**8.** Verfahren nach Anspruch 5, das ferner umfasst, die sich überdeckenden vorkonfigurierten Kanalbandbreiten zur selben Zeit zu verwenden.

**9.** Computerprogrammprodukt, das auf einem Verteilungsmedium enthalten ist, das durch einen Computer lesbar ist, und Programmanweisungen umfasst, die dann, wenn sie in eine Vorrichtung geladen werden, die in einem Anwendergerät enthalten ist, das Verfahren nach einem der Ansprüche 5 bis 8 ausführen.

**10.** Vorrichtung, die in einer Basisstation enthalten ist und Folgendes umfasst:

Mittel zum Planen in einem drahtlosen Kommunikationssystem, das konfiguriert ist, eine Kombination (#3) von vorkonfigurierten Kanalbandbreiten innerhalb eines verfügbaren Frequenzspektrums für einen Vorgang, der nicht mit konfigurierbaren Systembandbreiten übereinstimmt, zu verwenden, wobei die Kombination sich überdeckende vorkonfigurierte Kanalbandbreiten enthält und wobei die Gruppe verfügbarer Kombinationen (#1, #2, #3) von vorkonfigurierten Kanalbandbreiten, die mit einem Frequenzwiederverwendungsschema, das größer als 1 ist, eingesetzt werden, Trägermittelpositionen beibehält und variierende Teile des Frequenzspektrums unzugeteilt belässt.

**11.** Vorrichtung nach Anspruch 10, die ferner umfasst:

ein Abwärtsstreckenplanungselement, das konfiguriert ist, eine Zuteilung eines Abwärtsstreckendatenkanals in einem Bereich von sich überdeckenden vorkonfigurierten Kanalbandbreiten zu vermeiden.

**12.** Vorrichtung nach Anspruch 11, wobei das Abwärtsstreckenplanungselement ferner konfiguriert ist, zellenspezifische Abwärtsstreckenreferenzsymbole von beiden der Träger, die sich paarweise überdeckenden vorkonfigurierten Kanalbandbreiten in dem Bereich der sich überdeckenden vorkonfigurierten Kanalbandbreiten entsprechen, zu senden.

**13.** Vorrichtung nach Anspruch 10, wobei die Mittel zum Planen ferner zum Planen der sich überdeckenden vorkonfigurierten Kanalbandbreiten für die Verwendung zur selben Zeit dienen.

**14.** Verfahren für die Verwendung in einer Basisstation, das umfasst:

Planen in einem drahtlosen Kommunikationssystem, das konfiguriert ist, eine Kombination (#3) von vorkonfigurierten Kanalbandbreiten innerhalb eines verfügbaren Frequenzspektrums für einen Vorgang, der nicht mit konfigurierbaren Systembandbreiten übereinstimmt, zu verwenden, wobei die Kombination sich überdeckende vorkonfigurierte Kanalbandbreiten enthält und wobei die Gruppe verfügbarer Kombinationen (#1, #2, #3) von vorkonfigurierten Kanalbandbreiten, die mit einem Frequenzwiederverwendungsschema, das größer als 1 ist, eingesetzt werden, Trägermittelpositionen beibehält und variierende Teile des Frequenzspektrums unzugeteilt belässt.

**Revendications**

1. Appareil compris dans un équipement utilisateur, comprenant :

   un moyen d'utilisation dans un système de communication sans fil d'une combinaison (#3) de largeurs de bande de canaux préconfigurées dans un spectre de fréquences d'exploitation disponible qui ne correspond pas à des largeurs de bande de système configurables, dans lequel la combinaison comporte des largeurs de bande de canaux préconfigurées se chevauchant, et dans lequel l'ensemble de combinaisons possibles (#1, #2, #3) de largeurs de bande de canaux préconfigurées déployé dans un plan de réutilisation de fréquences de plus de 1 maintient des positions centrales de porteuses et laisse non attribuées diverses parties du spectre de fréquences.

2. Appareil selon la revendication 1, dans lequel les porteuses correspondant aux largeurs de bande de canaux préconfigurées se chevauchant comprennent un décalage temporel.

3. Appareil selon l'une quelconque des revendications précédentes, dans lequel des bandes de garde externes du spectre de fréquences disponible dans lequel aucun canal ne doit être attribué sont fournies par des bandes de garde virtuelles des largeurs de bande de canaux préconfigurées.

4. Appareil selon la revendication 1, dans lequel le moyen d'utilisation sert en outre à utiliser les largeurs de bande de canaux préconfigurées se chevauchant en même temps.

5. Procédé destiné à être utilisé dans un équipement d'utilisateur, comprenant :

   l'utilisation dans un système de communication sans fil d'une combinaison (#3) de largeurs de bande de canaux préconfigurées dans un spectre de fréquences d'exploitation disponible qui ne correspond pas à des largeurs de bande de système configurables, dans lequel la combinaison comporte des largeurs de bande de canaux préconfigurées se chevauchant, et dans lequel l'ensemble de combinaisons possibles (#1, #2, #3) de largeurs de bande de canaux préconfigurées déployé dans un plan de réutilisation de fréquences de plus de 1 maintient des positions centrales de porteuses et laisse non attribuées diverses parties du spectre de fréquences.

6. Procédé selon la revendication 5, dans lequel les porteuses correspondant aux largeurs de bande de canaux préconfigurées se chevauchant comprennent un décalage temporel.

7. Procédé selon l'une quelconque des revendications 5 à 6, dans lequel des bandes de garde externes du spectre de fréquences disponible dans lequel aucun canal ne doit être attribué sont fournies par des bandes de garde virtuelles des largeurs de bande de canaux préconfigurées.

8. Procédé selon la revendication 5, comprenant en outre l'utilisation des largeurs de bande de canaux préconfigurées se chevauchant en même temps.

9. Produit de programme informatique mis en oeuvre sur un support de distribution lisible par un ordinateur et comprenant des instructions de programme qui, à leur chargement dans un appareil, compris dans un équipement utilisateur exécutent le procédé selon l'une quelconque des revendications 5 à 8.

10. Appareil compris dans une station de base, comprenant :

    un moyen d'ordonnancement dans un système de communication sans fil configuré pour utiliser une combinaison (#3) de largeurs de bande de canaux préconfigurées dans un spectre de fréquences d'exploitation disponible qui ne correspond pas à des largeurs de bande de système configurables, dans lequel la combinaison comporte des largeurs de bande de canaux préconfigurées se chevauchant, et dans lequel l'ensemble de combinaisons possibles (#1, #2, #3) de largeurs de bande de canaux préconfigurées déployé dans un plan de réutilisation de fréquences de plus de 1 maintient des positions centrales de porteuses et laisse non attribuées diverses parties du spectre de fréquences.

11. Appareil selon la revendication 10, comprenant en outre :

    un élément d'ordonnanceur de liaison descendante configuré pour éviter l'attribution d'un canal de données de liaison descendante dans une région de largeurs de bande de canaux préconfigurées se chevauchant.

12. Appareil selon la revendication 11, dans lequel l'élément d'ordonnanceur de liaison descendante est configuré en outre pour envoyer des symboles de référence de liaison descendante spécifique à la cellule des deux porteuses correspondant à des largeurs de bande de canaux préconfigurées se chevauchant par paire dans la région de largeurs de bande de canaux préconfigurées se chevauchant.

13. Appareil selon la revendication 10, dans lequel le moyen d'ordonnancement sert en outre à ordonnancer les largeurs de bande de canaux préconfigurées se chevauchant en vue de les utiliser en même temps.

14. Procédé destiné à être utilisé dans une station de base, comprenant :

l'ordonnancement dans un système de communication sans fil configuré pour utiliser une combinaison (#3) de largeurs de bande de canaux préconfigurées dans un spectre de fréquences d'exploitation disponible qui ne correspond pas à des largeurs de bande de système configurables, dans lequel la combinaison comporte des largeurs de bande de canaux préconfigurées se chevauchant, et dans lequel l'ensemble de combinaisons possibles (#1, #2, #3) de largeurs de bande de canaux préconfigurées déployé dans un plan de réutilisation de fréquences de plus de 1 maintient des positions centrales de porteuses et laisse non attribuées diverses parties du spectre de fréquences.

EP 2 394 454 B1

| PRB | 1st OFDM symbol | 2 | 3 | 4 | 5 | 6 | 7 | 8 | 9 | 10 | 11 | 12 | 13 | 14 |
|---|---|---|---|---|---|---|---|---|---|---|---|---|---|---|
| 14 | NIL | | | | | | | | | | | | | |
| 13 | PCFICH + PHICH | | | | | | | | | | | | | |
| 12 | PHICH | | | | | | | | | | | | | |
| 11 | PHICH | | | | | | | | | | | | | |
| 10 | NIL | | | | | | | | | | | | | |
| 9 | PCFICH | | | | | S-Syn | P-Syn | PBCH | PBCH | PBCH | PBCH | | | |
| 8 | PDCCH + PHICH | | | | | S-Syn | P-Syn | PBCH | PBCH | PBCH | PBCH | | | |
| 7 | PHICH | | | | | S-Syn | P-Syn | PBCH | PBCH | PBCH | PBCH | | | |
| 6 | PCFICH + PHICH | | | | | S-Syn | P-Syn | PBCH | PBCH | PBCH | PBCH | | | |
| 5 | NIL | | | | | S-Syn | P-Syn | PBCH | PBCH | PBCH | PBCH | | | |
| 4 | NIL | | | | | S-Syn | P-Syn | PBCH | PBCH | PBCH | PBCH | | | |
| 3 | PHICH | | | | | | | | | | | | | |
| 2 | PCFICH + PHICH | | | | | | | | | | | | | |
| 1 | PHICH | | | | | | | | | | | | | |
| 0 | PDCCH | | | | | | | | | | | | | |

**Fig. 1**

$n_{PRB}$

| | | |
|---|---|---|
| $N_{RB}^{UL}$ -1 | m=1 | m=0 |
| $N_{RB}^{UL}$ -2 | m=3 | m=2 |
| | m= $N_{RB}^{PUCCH}$ -1 | |
| | | |
| | | |
| | | |
| | | |
| | | |
| | | |
| | | |
| 3 | | m= $N_{RB}^{PUCCH}$ -1 |
| 2 | | |
| 1 | m=2 | m=3 |
| 0 | m=0 | m=1 |

freq.

sub-frame

## Fig. 2

| Channel bandwidth $BW_{Channel}$ [MHz] | 1.4 | 3 | 5 | 10 | 15 | 20 |
|---|---|---|---|---|---|---|
| Transmission bandwidth configuration $N_{RB}$ | 6 | 15 | 25 | 50 | 75 | 100 |

## Fig. 3

**Fig. 4**

# Flexible BW by Dual Carrier: Conditional Carrier Interleaving, Variable BW and/or Reuse Pattern

**Fig. 5a**

# Flexible BW by Dual Carrier (continued)

**Fig. 5b**

**EP 2 394 454 B1**

**Patent documents cited in the description**

- US 2007298807 A1